# EUROPEAN PATENT SPECIFICATION

(11) **EP 0 676 161 B1**
(45) Date of publication and mention of the grant of the patent: **08.07.1998**
(21) Application number: 95302306.6
(22) Date of filing: 06.04.1995
(51) Int. Cl.: A47J 27/21

(54) **Filter kettle**
Kessel mit Filter
Bouilloire avec un filtre

(30) Priority: 06.04.1994 GB 9406787
(43) Date of publication of application: 11.10.1995
(73) Proprietor: MORPHY RICHARDS (N.I.) LIMITED, County Down, Northern Ireland BT19 2QT (GB)
(72) Inventor: Gunning, Alan, County Down BT19 6XU, Northern Ireland (GB)
(74) Representative: Tunstall, Christopher Stephen

(56) References cited:
- GB-A- 2 251 547
- GB-A- 2 261 362
- GB-A- 2 268 680
- GB-A- 2 274 791
- GB-A- 2 274 792
- GB-A- 2 280 596

## Description

This invention relates to a kettle fitted with a filter which prevents deposits, such as limestone scale, from leaving the spout of the kettle when water is poured out. The term "kettle" generally applies to a water container fitted with a lid and having some form of spout. The term "scale" includes material precipitated from boiling water which contains dissolved solids.

GB-A-2251547 describes a filter kettle having a holloware body, e.g. made from acetyl copolymer, which is fitted with a filter to prevent scum from being poured out with the boiling water. The scum results from precipitated scale which has not adhered to the internal walls of the kettle body and it can be seen, as an oily film, on the surface of a cup of tea or coffee made with the boiled water.

One preferred form of filter disclosed in GB-A-2251547 has a gauze mounted in a semi-circular frame, which is shaped to fit the interior wall of the body and to be supported, at the rear, by projections moulded onto the body, and at the front, by the kettle wall near the spout. A silicon rubber bead, attached to the front of the frame, fits against the wall to provide a seal. The filter slopes downwardly and is fitted by downward pressure to make the seal. Therefore, it could become dislodged, in use, by the outflow of water. An alternative filter, which is briefly mentioned, is located in an upright position across the spout, but there is no disclosure as to how this upright filter can be supported. In any event, this alternative is discarded in favour of the more preferred transversely arranged filter, which is said to provide a better seal and to be more easily supported than the upright filter. Another filter is briefly mentioned which is pivotally mounted by a support member to the undersurface of the lid. However, as will be apparent from the following description, such a pivotal mounting is not a solution to the problems faced by the invention and, in any event, is useless without an adequate seal. A further preferred form of filter is disclosed, which resembles an upright cartridge, slidably received by two guard-rails moulded integrally with the walls of the kettle body. This again requires changes in the moulding of the body and the filter is of more complex internally fitted construction.

Other forms of electric kettle are presently available on the market which have filters mounted within the spout. In one case, the filter is slidably received in guard-rails moulded into the spout. In another case, a small basket filter is mounted in a spout cap. Whilst these forms of filter kettle are less expensive to manufacture, the surface area of the filter is limited by the cross-section of the spout. Therefore, it has a much smaller filtration area than the preferred forms of filter disclosed in GB-A-2251547. Moreover, because the filter medium is located near to the exit of the spout, it can introduce too much turbulence into the water leaving the spout, and this will prevent the water pouring out cleanly. Filters fitted to spouts can be more easily seen and removed but, in time, can also become coated with scale, thereby causing difficulty on removal.

At least a preferred embodiment of the invention seeks to provide a kettle with an effective filter without having to modify the holloware body of the kettle, since this would otherwise add to the manufacturing expense. It also seeks to provide a kettle with a filter which is easy to remove, readily visible, and less prone to becoming attached to internal wall surfaces of the kettle due to scale deposits.

The invention provides a kettle comprising a holloware body or receptacle, fitted with a lid, and having a spout, the kettle including a filter having a filtration medium which is suitable for preventing scale or scum from leaving the kettle when water has been boiled, characterised in that the filter is rigidly supported by the lid so that, when the lid is closed, peripheral edges of the filter engage with corresponding internal wall surfaces of the body, which border the spout; the filter being removed from such engagement, when the lid is opened.

Preferably, the kettle is designed so that as the lid is closed, a slight bias is applied to the filter to hold it more firmly against the internal wall surface of the body, thereby making a better seal. In this case, a rigid filter, which may have a rigid frame in which a filtration medium is supported, can be used without the necessity for introducing a compliant sealing means at the interface between the peripheral edges of the filter (or frame) and the internal wall surfaces of the body of the kettle. In prior art filters, a silicone rubber seal is used at this interface. A filter frame can therefore be made of the same material as the kettle body, e.g. polypropylene, and of a shape to enable it to be snap-fitted to the lid, whereby manufacturing expense is reduced. However, if required, it would be possible to make the peripheral edges of the filter resilient, flexible, or compressible, or to fit a compliant seal to those edges, so that the edges or seal deforms slightly, under the closing bias, to improve the seal.

In a preferred embodiment of the invention, the filter supports the filtration medium in such a way that it is spaced from internal wall surfaces of the body, at least below the spout, but preferably beyond the entire internal edge or edges of the spout. This creates a passageway between the filtration medium and confronting wall surfaces of the kettle, which allows filtered water to pass into a chamber before leaving the spout. If the kettle body is generally cylindrical, and the filter is of arcuate shape, this passageway is a portion of the annular space therebetween. A particular advantage of this arrangement is that the filter medium can have a much larger filtration area than the cross section of the spout opening. Moreover, water which has passed through the filtration medium is not then impeded by the internal walls of the kettle before leaving the spout.

When a steam guard is fitted to the lid, which depends into the spout opening, the arrangement is such that the filtration medium is spaced from the steam guard to create a corresponding water passageway (i.e. for reasons similar to those mentioned above).

The filter medium may take various forms. However, it is conveniently a sheet of permeable material, such as gauze, paper, or ceramic material, which is supported in a frame having a lip defining peripheral sealing edges of the filter. The latter peripheral sealing edges can have a suitable profile to improve sealing contact. Alternatively, a compliant seal could be fitted to the peripheral edges of the filter, for example, made of silicon rubber, to improve the seal. The filter frame is suitably made of rigid material, such as a rigid form of polypropylene, and the material of its construction and its design are such that it extends substantially rigidly from the lid in such a way that, when the lid is closed, it maintains an engaging and sealing fit with the internal wall of the kettle.

Preferably, the filter is removably fitted to the lid. This can be facilitated by means of a catch or projection on the filter, which engages with a recess or hole in the lid. In the preferred embodiment of the invention, the filter has an upper portion with projecting ribs, the upper portion being shaped to be slidably received in a recess in the lid and having the catch or projection mentioned above. The remainder of the filter defines the above-mentioned frame, in which the filtration medium is mounted, the frame having a forwardly projecting peripheral lip which faces the kettle wall when the lid is fitted.

In the preferred embodiment of the invention, the body of the kettle is jug-shaped with a spout having an open edge, and the lid is a push fit onto the upper rim of the jug, which preferably has a slight taper (e.g. a moulding taper). Advantage is taken of this taper, by shaping the filter and positioning it on the lid so that the internal wall of the kettle body applies a thrust to the peripheral edges of the filter when the lid is closed.

It would be possible to apply the principles of the invention to kettles with bodies and/or spouts of other shapes. If the lid were hinged, clearance would be required to prevent collision between the filter (and steam guard, if fitted) and the internal wall of the kettle, but the steam guard and spout could be shaped to make an allowance for this. Alternatively, the hinge could have a toggle action, allowing the lid to be raised before hinging open.

A preferred embodiment of the invention will now be described with reference to the accompanying schematic drawings, in which:-
Fig. 1 is a perspective view of an electric kettle;
Fig. 2 is a sectioned view, through the spout of the kettle, showing a filter which is an example of the invention;
Figs. 3-5 are respective front, rear plan views of the filter, when removed from the lid;
Figs. 6-8 are respective sections of the filter on lines AA, BB, and FF;
Fig. 9 is an underside view of the front of the lid shown in Fig. 2,
Fig. 10 is a front elevation of the lid,
Fig. 11 is a part sectional view, from inside the kettle, showing the lid fitted to the body and the filter in place, and
Fig. 12 is a section on line CC of Fig. 11.

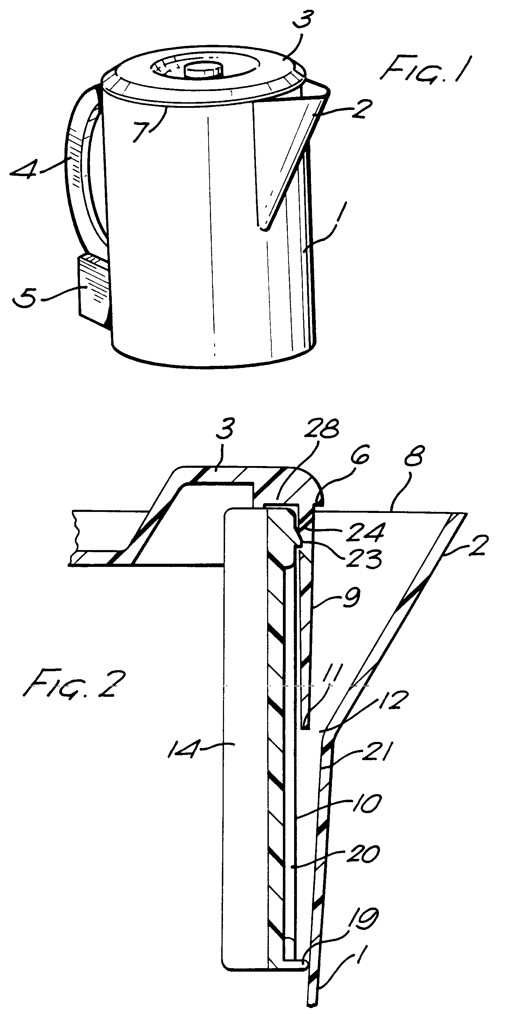

As shown in the drawings, an electric kettle includes a body 1 with a spout 2 and a lid 3. A handle 4, and a housing 5 for electrical terminals, are integrally moulded with the body 1, the terminals making connection with a socket of an electrical lead (not shown), which supplies current to heating element fitted within the body of the kettle (not shown). The body 1 and lid 3 may be made of moulded plastics material, such as acetal copolymer or polypropylene. The body has a slight taper, such as a moulding taper of 1°-2°, which has been exaggerated in Fig. 2 for the sake of clarity. The lid 3 is a push fit onto the body.

Fig. 2 shows the lid in its closed position, where its lower circular edge 6 abuts the upper confronting circular edge 7 of the body 1. This leaves the upper external edge of the spout clear for the passage of water and/or steam. However, a steam guard 9 integral with lid 3, depends into the body 1 and covers a large proportion of the mouth of spout 2 on the inside wall of the kettle body. This mouth is generally U-shaped and is smaller than the adjacent peripheral edge of filter 14 (which is described below). Steam guards are known and are used to prevent too much steam from escaping and/or splashing of boiling water, when the kettle boils. The lower edge 11 of guard 9 is spaced from the internal wall of body 1, so as to leave a gap 12. which restricts the passage of steam, but allows water to flow therethrough when the kettle is tilted.

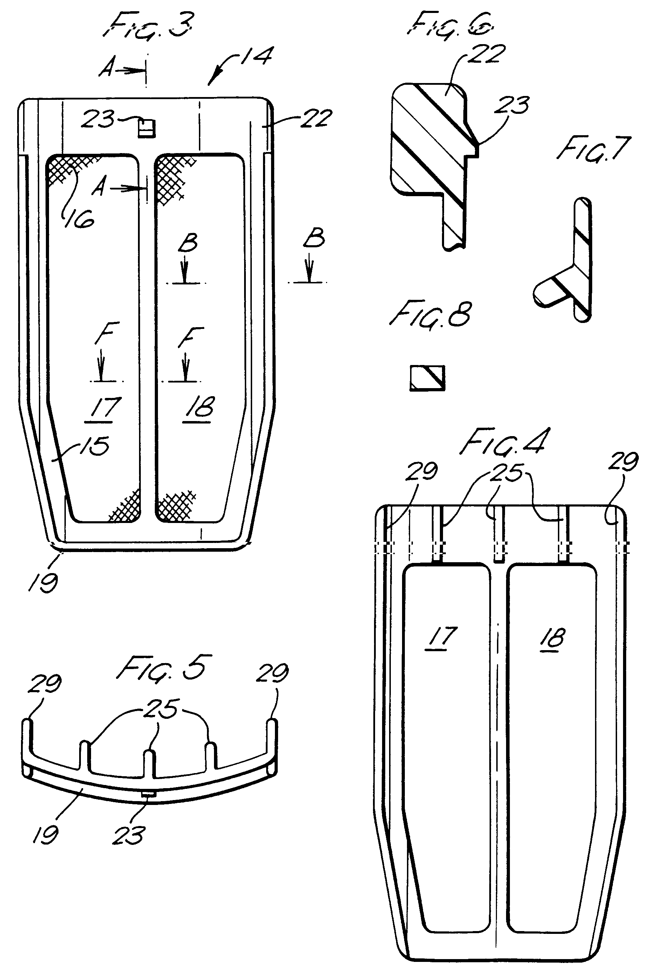

As shown in Figs. 3-5, filter 14 which is made of polypropylene for example, comprises a frame 15, supporting a filter medium 16. Medium 16 is in the form of a sheet of permeable material, such as gauze, paper, or ceramics, which is bonded to frame 15 so as to be sealed against the frame portions which define windows 17,18. Only a portion of the gauze medium is shown in the drawings. A plastics gauze may be moulded or welded to the frame and have a pore size of about 50 µm. The pore size of the medium is chosen, in general to provide satisfactory scale or scum removal. The frame has a generally U-shaped, forwardly projecting lip 19, defining a shallow recess 20 that spaces the filter medium 16 away from both the steam guard 9 and opposite internal wall surfaces of body 1. The latter wall surfaces are those which extend between the internal edge of spout 2 and the sealing edge of the filter 14 within body 1. This recess provides a passageway for water which has passed through the filtration medium and thereby enables a much higher filtration area to be used. In the absence of this recess, the filter 14 would be too close to the internal wall and steam guard, which would severely limit the outflow of water when the kettle is tilted. Lip 19, has a rounded or semi-circular shape, and serves mainly to provide a seal around the corresponding internal wall surfaces of body 1 adjacent spout 2. This prevents water escaping around the peripheral edges of the filter 14. Lip 19/frame 15 can be made of resilient or compliant material, or a pliable seal can be applied to the peripheral edge to assist in making the seal when the lid 3 is closed. The dimensions and outer shape of filter 14 and of the body 2 are also such that slight pressure must be applied to close the lid whereby the sealing lip 19 is pressed against the internal wall surfaces of the kettle to improve the seal. Whilst a watertight seal is ideal, microscopic clearances, would not unduly affect the action of the filter, because the bulk of the water will pass freely through the filter medium 16, since this has a large surface area.

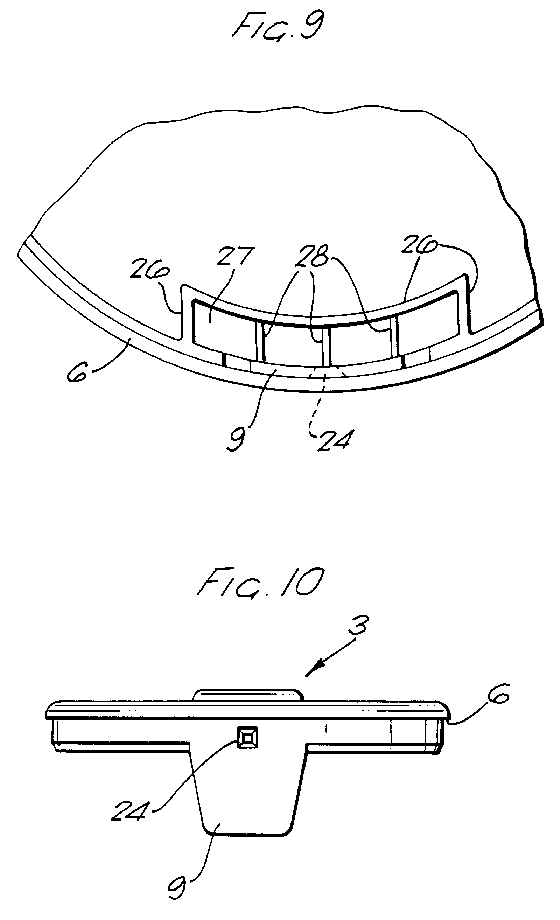

An upper portion 22 of filter 14 has a thickened section, as shown on lime AA of Fig. 6, and is provided with a small wedge-shaped projection 23. This projection is shown engaged with a flared or countersunk opening 24 in guard 9. Figs 7 and 8 respectively show sections on line BB and line FF of Fig. 3.

Fig. 4 shows the rear of frame 15 of the filter 14, but without the filter medium 16 present. The side edges project rearwardly, in the form of ribs or ridges 29. These ribs 29 extend over the height of the filter element 14. Between the side ribs 29 are three spaced short ribs 25, also projecting rearwardly, which serve to locate element 14 in the lid (as explained below). The longer ribs 29 help to reinforce the element 14 so as to maintain a rigid shape in use.

Fig. 9 shows the underside of the front portion of lid 3. This includes walls 26 defining a recess 27, in the floor of which are some short reinforcing ribs 28. The extent of these ribs 28 can be appreciated by considering that the central rib 28 is shown, in solid cross-section in Fig. 2. The upper portion 22 of element 14 is slidably received in the recess 27, so that projection 23 engages with the flared hole 24 as shown in Fig. 2. The upper portions of ribs 29, together with the short ribs 25, provide a good sliding fit. The sloping face of projection 23 facilitates entry of the upper portion 22 into the recess 27, when the filter 14 is fitted.

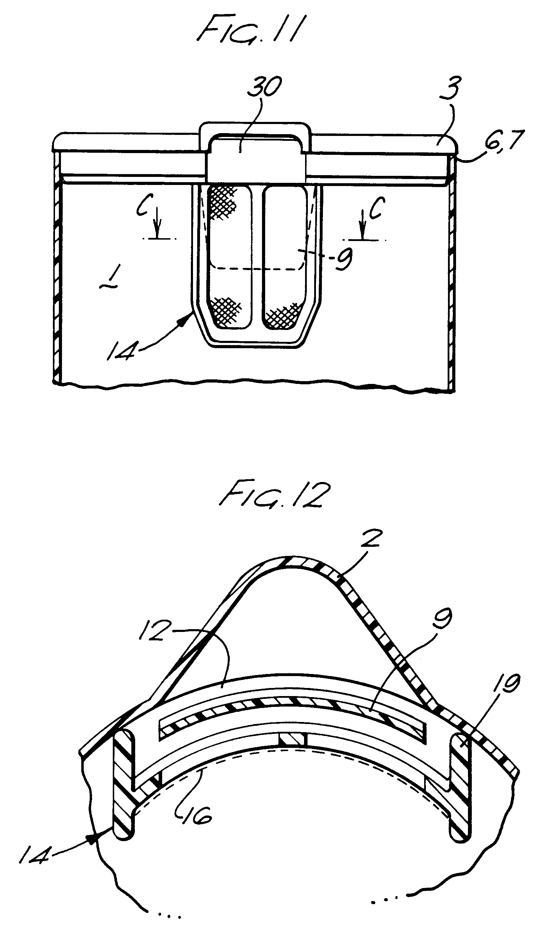

Fig. 10 shows the lid 3, from a front elevation, and Fig. 11 shows the lid 3, fitted to the body 1, from a rear elevation (the body being sectioned). In Fig. 11, the filter element 14 is seen from the inside of the kettle, looking out towards the spout 2, but the guard 9 is shown in broken line, since it is behind the filter 14.

Fig. 12 is a section on line CC of Fig. 11 and it shows how the forwardly projecting side portions of lip 19 seals against the internal side wall surfaces of body 1. Fig. 2 shows how the bottom potion of lip 19 seals against a lower wall surface of the body 1.

The shape of body 1 and the shape and dimensions of filter 14 cooperate so that, when the lid 3 is closed, the lower lip 19 abuts the internal wall surface, as shown in Fig. 2, with a slight bias so as to make good sealing contact.

The above filter kettle has the following advantages:-
(a) The filter is fitted to the lid and not to the holloware body 1 of the kettle, so that no moulding changes are required to the body. This reduces the cost of manufacture;
(b) The filter is immediately visible when the lid is removed so that it can be readily inspected, easily removed and fitted either for replacement, or cleaning;
(c) Each time the lid is opened and closed, this will break any coating or film which could otherwise cement the filter to the kettle body;
(d) The filter is fitted across the spout but has a comparatively large surface areas. This is due to the way in which the filter medium is spaced from the internal wall to allow water to flow more easily and smoothly through the spout opening. This also keeps turbulence to a minimum and the water can be poured easily from the spout without splashing;
(e) Resilient sealing means are not essential around the peripheral edges of the frame.

## Claims

1. A kettle comprising a holloware body or receptacle, fitted with a lid, and having a spout, the kettle including a filter having a filtration medium which is suitable for preventing scale or scum from leaving the kettle when water has been boiled, characterised in that the filter is rigidly supported by the lid so that, when the lid is closed, peripheral edges of the filter engage with corresponding internal wall surfaces of the body, which border the spout; the filter being removed from such engagement, when the lid is opened.

2. A kettle according to Claim 1 in which the filter has a rigid construction and the body and lid cooperate so that a slight bias is applied to the filter to hold it against the internal wall surface of the body to make said engagement.

3. A kettle according to Claim 2 in which the peripheral edges of the filter are resilient, flexible, or compressible, or fitted with a compliant seal, so that the edges deform slightly, under the closing bias.

4. A kettle according to any of the preceding Claims in which the filter supports the filtration medium in such a way that it is spaced from internal wall surfaces of the body, at least below the spout, but preferably beyond the entire internal edge or edges of the spout, the spacing creating a passageway between the filtration medium and confronting wall surfaces of the body.

5. A kettle according to any of the preceding Claims in which a steam guard is fitted to the lid, which depends into the spout opening, the filtration medium being spaced from the steam guard to create a passageway to receive water which has passed through the filtration medium.

6. A kettle according to any of the preceding Claims in which the filtration medium is in the form of a sheet permeable material.

7. A kettle according to any of the preceding Claims in which the filter is removably fitted to the lid.

8. A kettle according to Claim 7 wherein the filter includes a catch or projection which engages with a recess or hole in the lid.

9. A kettle according to Claim 7 or 8, in which the filter has a upper portion with projecting ribs, the upper portion being shaped so that it can be slidably received in a recess in the lid.

10. A kettle according to any of the preceding Claims in which the peripheral edges of the filter are those of a forwardly projecting lip which faces the internal wall surfaces of the body when the lid is fitted.

11. A kettle according to any of the preceding Claims in which the body is jug-shaped, the spout having an open edge and the lid being a push-fit onto a upper rim of the jug-shaped body, said body having a slight taper which applies a thrust to the peripheral edges of the filter when the lid is closed.

## Patentansprüche

1. Kessel mit einem Hohlwarenkörper oder- behältnis, der bzw. das mit einem Deckel versehen ist und einen Ausguß aufweist, wobei der Kessel einen Filter mit einem Filtermedium enthält, das sich dazu eignet, zu verhindern, daß Kalk oder öliger Film den Kessel verlaßt, wenn Wasser gekocht worden ist, dadurch gekennzeichnet, daß der Filter derart von dem Deckel starr gestützt wird, daß bei geschlossenem Deckel Umfangskanten des Filters dazugehörige Innenwandflächen des Körpers in Eingriff nehmen, welche den Ausguß begrenzen; wobei der Filter aus einem derartigen Eingriff entfernt wird, wenn der Deckel geöffnet wird.

2. Kessel nach Anspruch 1, bei dem der Filter eine starre Konstruktion aufweist und der Körper und der Deckel so zusammenwirken, daß auf dem Filter eine leichte Vorspannung ausgeübt wird, um ihn an der Innenwandfläche des Körpers zu halten, um den Eingriff herzustellen.

3. Kessel nach Anspruch 2, bei dem die Umfangskanten des Filters elastisch, flexibel oder zusammendrückbar sind oder mit einer nachgiebigen Dichtung versehen sind, so daß die Kanten sich unter der Schließvorspannung etwas verformen.

4. Kessel nach einem der vorhergehenen Ansprüche, bei dem der Filter das Filtermedium derart stützt, daß es zumindest unter dem Ausguß, aber vorzugsweise über der gesamten Innenkante oder den gesamten Innenkanten des Ausgusses, von den Innenwandflächen des Körpers beabstandet ist, wobei der Abstand einen Durchgang zwischen dem Filtermedium und gegenüberliegenden Wandflächen des Körpers bildet.

5. Kessel nach einem der vorhergehenen Ansprüche, bei dem an dem Deckel ein Dampfschutz angebracht ist, der in die Ausgußöffnung hängt, wobei das Filtermedium von dem Dampfschutz beabstandet ist, so daß ein Durchgang zur Aufnahme von Wasser, das durch das Filtermedium getreten ist, gebildet wird.

6. Kessel nach einem der vorhergehenen Ansprüche, bei dem das Filtermedium in Form eines flächigen, durchlässigen Materials vorliegt.

7. Kessel nach einem der vorhergehenen Ansprüche, bei dem der Filter lösbar an dem Deckel angebracht ist.

8. Kessel nach Anspruch 7, bei dem der Filter einen Sperrstift oder Vorsprung enthält, der in eine Aussparung oder ein Loch im Deckel eingreift.

9. Kessel nach Anspruch 7 oder 8, bei dem der Filter einen oberen Teil mit vorstehenden Rippen aufweist, wobei der obere Teil so geformt ist, daß er gleitend in einer Aussparung des Deckels aufgenommen werden kann.

10. Kessel nach einem der vorhergehenen Ansprüche, bei dem die Umfangskanten des Filters jene einer nach vorne ragenden Lippe sind, die zu den Innenwandflächen des Körpers weist, wenn der Deckel angebracht ist.

11. Kessel nach einem der vorhergehenen Ansprüche, bei dem der Körper kannenförmig ist, wobei der Ausguß eine offene Kante aufweist und der Deckel auf einen oberen Rand des kannenförmigen Körpers aufgeschoben werden kann, wobei der Körper eine leichte Konizität aufweist, die auf die Umfangsränder des Filters eine Schubkraft ausübt, wenn der Deckel geschlossen ist.

## Revendications

1. Bouilloire comprenant un corps ou un récipient creux, munie d'un couvercle et ayant un bec, la bouilloire comportant un filtre ayant un moyen de filtration capable d'empêcher du calcaire ou des débris de quitter la bouilloire lorsque l'eau a bouilli, caractérisée en ce que le filtre est supporté rigidement par le couvercle de telle sorte que lorsque le couvercle est fermé, les bords périphériques du filtre engagent des surfaces de paroi interne correspondantes du corps, qui bordent le bec; le filtre étant retiré d'un tel engagement lorsque le couvercle est ouvert.

2. Bouilloire selon la revendication 1, dans laquelle le filtre a une construction rigide et le corps et le couvercle coopèrent de telle sorte qu'une légère poussée soit appliquée au filtre pour le retenir contre la surface de paroi interne du corps pour réaliser ledit engagement.

3. Bouilloire selon la revendication 2, dans laquelle les bords périphériques du filtre sont élastiques, flexibles, ou compressibles, ou munis d'un joint souple, de sorte que les bords se déforment légèrement sous l'effet de la poussée de fermeture.

4. Bouilloire selon l'une quelconque des revendications précédentes, dans laquelle le filtre supporte le moyen de filtration d'une telle manière qu'il est espacé des surfaces de paroi interne du corps, au moins en dessous du bec, mais de préférence au-delà de l'ensemble du ou des bords interne(s) du bec, l'espacement créant un passage entre le moyen de filtration et les surfaces de paroi en regard du corps.

5. Bouilloire selon l'une quelconque des revendications précédentes, dans laquelle une protection contre la vapeur est ajustée au couvercle, et descend dans l'ouverture du bec, le moyen de filtration étant espacé de la protection contre la vapeur pour créer un passage destiné à recevoir l'eau qui est passée à travers le moyen de filtration.

6. Bouilloire selon l'une quelconque des revendications précédentes, dans laquelle le moyen de filtration est en forme d'un matériau perméable en nappe.

7. Bouilloire selon l'une quelconque des revendications précédentes, dans laquelle le filtre est ajusté au couvercle de manière amovible.

8. Bouilloire selon la revendication 7, dans laquelle le filtre comporte un ergot ou une saillie qui engage un retrait ou un trou dans le couvercle.

9. Bouilloire selon la revendication 7 ou 8, dans laquelle le filtre a une portion supérieure avec des nervures en saillie, la portion supérieure étant formée de telle sorte qu'elle puisse être reçue à coulissement dans un retrait du couvercle.

10. Bouilloire selon l'une quelconque des revendications précédentes, dans laquelle les bords périphériques du filtre sont ceux d'une lèvre saillant vers l'avant, qui fait face aux surfaces de paroi interne du corps quand le couvercle est ajusté.

11. Bouilloire selon l'une quelconque des revendications précédentes, dans laquelle le corps a une forme de cruche, le bec ayant un bord ouvert et le couvercle s'ajustant par poussée sur un rebord supérieur du corps en forme de cruche, ledit corps ayant une légère conicité qui exerce une poussée sur les bords périphériques du filtre quand le couvercle est fermé.
